**Europäisches Patentamt**

**European Patent Office**

**Office européen des brevets**

(19)

(11) Numéro de publication: **0 015 194**
**B1**

(12) # FASCICULE DE BREVET EUROPEEN

(45) Date de publication du fascicule du brevet: **27.06.84**

(51) Int. Cl.³: **A 21 C 11/00, A 21 C 3/02**

(21) Numéro de dépôt: **80400214.5**

(22) Date de dépôt: **14.02.80**

(54) Procédé et machine de façonnage de pâtons.

(30) Priorité: **20.02.79 FR 7904772**

(43) Date de publication de la demande:
**03.09.80 Bulletin 80/18**

(45) Mention de la délivrance du brevet:
**27.06.84 Bulletin 84/26**

(84) Etats contractants désignés:
**AT BE CH DE FR GB IT LU NL SE**

(56) Documents cités:
**DE - C - 157 660**

(73) Titulaire: **Brassart, Bernard**
**Chemin des Anglais 41**
**Hinges (FR)**

(72) Inventeur: **Moreau, Léonce**
**107, Bd de Paris**
**F-62190 Lillers (FR)**

(74) Mandataire: **Ecrepont, Robert**
**Cabinet Ecrepont 12 Place Simon Vollant (Porte de Paris)**
**F-59800 Lille (FR)**

Courier Press, Leamington Spa, England.

## Description

L'invention se rapporte à un procédé de façonnage d'au moins un pâton pour lui donner la forme d'un élément plat de contour sensiblement circulaire qui, notamment, pourra être utilisé comme pain spécial en forme de galette ou entrer dans la confection d'une préparation culinaire telle qu'une pizza ou une tarte.

L'invention se rapporte également à la machine permettant la mise en oeuvre de ce procédé.

Sont déjà connues des machines qui, après pétrissage puis fermentation et division de la pâte mais évidemment avant la soumisson des pâtons à la cuisson dans un four, assurent le façonnage de ces pâtons en forme de fines galettes sensiblement circulaires.

Une première machine imaginée (DE—C—157.660) comprend un rouleau conique incliné de manière telle que sa génératrice inférieure soit horizontale et radiale à l'arbre qui le porte, autour duquel arbre ce roulea est mû en rotation et au long de l'axe duquel arbre, il est mû en translation pour aplatir la pâte sur laquelle il est en contact direct. Cette machine n'a jamais été utilisée car la rotation autour de l'arbre, du rouleau qui est en contact direct avec la pâte fait tourner le pâton sur la table sans le travailler.

De plus, même si on parvenait à immobiliser le pâton, sa partie centrale était abimée par l'extrémité de rouleau.

Quant aux machines utilisées à ce jour (FR—A—2.354.050 et 2.303,478) elles sont toutes basées sur le même principe qui consiste à amener à leur entrée les pâtons qui ont alors une forme de boule plus ou moins régulière et à leur faire subir deux phases successives d'amincissement au cours desquelles ce pâton est travaillé selon deux directions perpendiculaires. Pour chaque phase d'amincissement, le pâton est amené à un poste de travail distinct où il est aplate à l'aide d'au moins un rouleau.

Pour travailler le pâton selon deux directions perpendiculaires, les machines peuvent évidemment avoir leurs deux postes de travail qui sont disposés perpendiculairement entre eux et alimentés en pâtons par un chemin en L, par exemple formé de deux tapis sans fin.

Plus généralement, toutefois, les machines connues ont leur deux postes de travail qui sont disposés parallèlement entre eux et alimentés en pâtons par un chemin rectiligne, auquel cas entre les deux postes est disposé un moyen faisant pivoter le pâton de quatre-vingt dix degrés.

Ayant ainsi pivoté, le pâton, auquel le premier amincissement a déjà communiqué une forme ovale, se présente alors au second poste de travail avec son petit axe parallèle au sens d'avance pour que le duexième amincissement qu'il subit, lui communique sa forme finale plus ou moins circulaire.

Ce procédé connu et les machines qui l'appliquent présentent de nombreux inconvénients:

— tout d'abord, le passage du pâton à deux postes distincts de travail, conduit à une machine très encombrante,
— ensuite, pour obtenir une forme sensiblement circulaire, il est nécessaire d'avoir au départ un pâton en boule de forme sphérique très régulière et surtout de partager exactement les actions successives d'amincissement pour obtenir un état intermédiaire précis, ce qui demande un réglage délicat, lequel sera à répéter si l'on veut ensuite modifier l'épaisseur finale de la galette.
— par ailleurs, la place utile au pivotement du pâton, qui ne permet pas de réaliser, côte à côte, plusieurs galettes à la fois, de même que le temps de passage à deux postes distincts et surtout le temps nécessaire au pivotement du pâton selon un angle précis qui freine la production de chaque galette, interdisent à la machine des débits suffisants pour lui permettre de suivre la cadence d'alimentation d'un four de cuisson qui serait utilisé à plein rendement.

Aussi, un résultat que l'invention vise à obtenir est un procédé de façonnage des galettes en une seule phase et donc par passage à un seul poste de travail, ce qui:

— abaisse très sensiblement le temps nécessaire à la mise en forme,
— réduit fortement l'encombrement de la machine,
— permet sans affecter la forme circulaire, de modifier, l'epaisseur de la galette finale,
— évite aussi tout réglage en vue de l'obtention d'un état intermédiaire précis.

Un autre résultat de l'invention est une machine qui, ne nécessitant pas le pivotement du pâton, peut façonner chaque galette à une très grande vitesse qui peut alors être synchronisée avec la cadence optimale d'alimentation du four de cuisson.

A cet effet, l'invention a pour objet un procédé de façonnage d'un pâton mince de contour circulaire à partir d'un pâton en forme de boule disposé sur une table, par aplatissement du dit pâton à l'aide d'au moins un rouleau de laminage dont la génératrice inférieure est parallèle ou légèrement inclinée vers la table et qui, par rapport à la dite table,

— d'une part, en est progressivement rapproché et,
— d'autre part, est mû en rotation autour d'un axe perpendiculaire à la dite table,

ce procédé étant caractérisé, d'une part, en ce qu'on matient le rouleau sur le pâton dans une position diamétrale, en ce qu'on utilise un rouleau dont la longueur est supérieure au diamètre de la galette à obtenir et dont l'axe de

**0015194**

rotation passe par son milieu, en ce qu'on centre le pâton sur cet axe et, d'autre part, en ce qu'on immobilise en rotation et interpose, entre le pâton et le roulea, une pièce déformable au passage du rouleau.

L'invention a également pour objet une machine façonnant au moins un pâton selon ce procédé et comprenant au moins un rouleau de laminage, dont la génératrice inférieure est parallèle ou légèrement inclinée vers le plan de la dite table et qui est mû en rotation autour d'un axe perpendiculaire à la dite table, cette machine comprenant en outre des moyens en vue du rapprochement du rouleau et de la table et étant caractérisée, d'une part, en ce que le rouleau a une longueur supérieure au diamètre de la galette à obtenir et en ce qu'il est associé à un support solidaire d'un arbre comportant un moyen pour sa commande en rotation autour de l'axe perpendiculaire à la table, le dit axe passant par le mileu du rouleau et, d'autre part, en ce qu'elle comporte une pièce déformable immobilisée en rotation et destiné à être interposée entre le rouleau et le pâton et au travers et par déformation de laquelle, le roulea aplatit le pâton.

L'invention sera bien comprise à l'aide de la description ci-après faite à titre d'exemple non limitatif, en regard du dessin ci-annexé, qui représente schématiquement:

—figure 1: vue en perspective, une machine équipée pour préparer trois galettes à la fois et comportant donc trois têtes de façonnage,

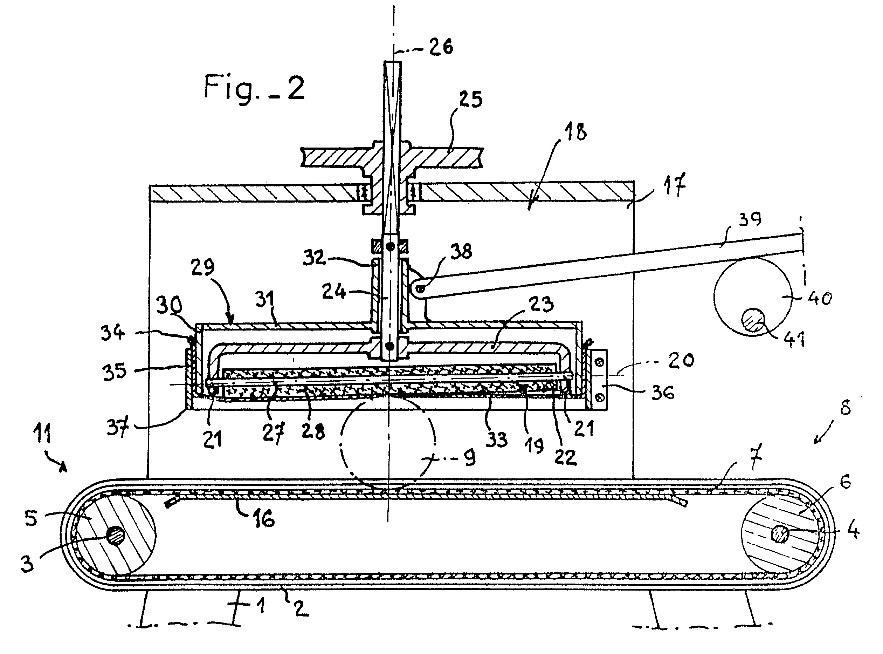

—figure 2: vu en coupe, un type de tête de façonnage montrée en détail.

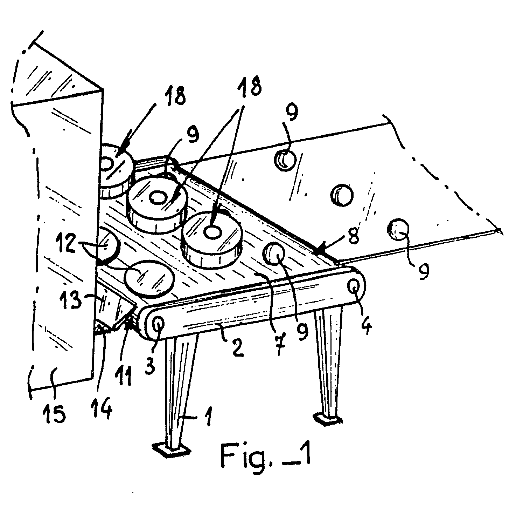

La machine représentée en figure 1, comprend un piètement 1 supportant un bâti 2 recevant les axes 3 et 4 des tambours 5, 6 dont au moins l'un est mû en rotation par tout moyen connu, et sur lesquels tambours est passé un tapis sans fin 7.

A l'entrée 8 du tapis sans fin, les pâtons 9 en forme de boules par exemple, de cent cinquante grammes ou trois cents grammes chacune, sont amenés par tout moyen connu, tel un distributeur de pâtons ou un transporteur à bande venant de postes non représentés où la pâte a déjà subi des opérations de pétrissage, fermentation, pesage et division en pâtons.

En sortie 11 du tapis 7, les pâtons 12 en forme de fines galettes circulaires sont décollées par une palette 13 qui les guide dans leur course vers l'entrée 14 du four 15 soumettant ces pâtons à la cuisson qui transformera leur pâte fermentée en pain.

Entre l'entrée 8 et la sortie 11 du tapis, dans la zone de façonnage, la bâti 2 porte:

— d'une part, une table 16 de soutien du tapis et

— d'autre part, une superstructure 17 à laquelle est associée au moins une tête 18 de façonnage.

Le nombre de têtes peut varier par exemple en fonction du débit souhaité et de la largeur du four avec la marche duquel la machine est de préférence synchronisée.

Dans l'exemple représenté, la machine comporte trois têtes 18 qui permettent donc de former en même temps trois galettes.

Chaque tête de façonnage comprend un rouleau 19 dont l'axe 20 est matérialisé par des tourillons 21 et dont la génératrice inférieure 22 est sensiblement parallèle au plan de la table 16.

Selon la caractéristique essentielle de l'invention, le rouleau 19 a une longueur supérieure au diamètre de la galette à réaliser. De plus, il est associé à un support 23 solidaire d'un arbre 24 portant un moyen 25 le commandant en rotation autour de son axe 26 qui est perpendiculaire au plan de la table et passe à la fois par le milieu du rouleau et pratiquement par le centre du pâton à mettre en forme.

Selon une autre caractéristique de l'invention, la génératrice inférieure du rouleau n'est pas parfaitement parallèle à la table, mais est légèrement inclinée par exemple selon une pente de trois pour cent environ.

Cette pente moyenne peut être obtenue par inclinaison de l'axe 20 d'un rouleau 19 qui serait cylindrique ou par l'utilisation d'un rouleau tronconique. Les tourillons 21 du rouleau peuvent être formés par les extrémités d'une tige axiale 27 portant la garniture 28 du rouleau, laquelle garniture sera de préférence en matériau offrant une certaine souplesse.

Le support 23 consiste avantageusement en une chape saisissant le rouleau 19 à chacune de ses extrémités en des points diamètralement opposés par rapport au centre de la galette.

Le rouleau 19 et sa chape 22 sont recouverts par un carter rigide 29 formé d'une couronne 30 et d'un courvercle 31 portant en son centre un moyeu 32 traversé par l'arbre 24.

Selon une autre caractéristique de l'invention, contre l'ouverture à la base du carter, est tendue une pièce déformable telle une toile 33 dont le pourtour 34 est rabattu contre la couronne 30 du carter pour y être fixé par un collier 35 présentant un moyen deserrage 36.

Cette toile évite ainsi tout contact direct du pâton avec le rouleau en mouvement, lequel pourrait par exemple, sinon déchirer la pâte, au moins la décoller du tapis et l'entraîner en rotation.

Bien qu'agissant au travers de la toile, par son mouvement de rotation autour de l'axe 26 de l'arbre 24 et donc autour de l'axe du pâton 9, le rouleau 19 qui est lui-même en rotation autour de son axe 20, lamine le pâton initialement fourni en forme de boule. Le rouleau aplatit donc progressivement le pâton en conservant constamment la forme circulaire de sa section horizontale, le roulea n'étant pas radial mais diamétral, le milieu du pâton n'est pas abimé par l'extrémité du dit rouleau.

Grâce à ce procédé nouveau de mise en forme, l'épaisseur finale de la galette peut être modifiée sans affecter la régularité de sa forme.

Aux lieu et place de la toile, on peut évidemment disposer toute autre feuille souple ou pièce déformable par le passage du rouleau. Pour régler cette épaisseur, le bord inférieur 37 du collier 35 ou une autre pièce associée au carter 29 peut constituer une butée coopérant par exemple avec le bâti ou la table 16 pour limiter à une valeur pré-réglable le rapprochement du rouleau par rapport à la table.

Ce rapprochement du rouleau par rapport à la table peut évidemment être obtenu par toute commande en translation verticale agissant sur la tête et/ou sur la table.

Dans l'exemple représenté, cette commande en translation verticale agit sur les têtes, soit toutes ensembles, soit indépendamment les unes des autres.

Le tapis 7, qui reçoit les pâtons 9 avec entre eux leurs axes un espace constant, avance pas à pas, à chaque fois d'une distance égale à cet entre-axe, pour, à chacun de ses arrêts présenter un pâton 9 en bonne place sous chaque tête de façonnage 18.

Dans l'exemple représenté, au carter 29 du rouleau 19 est associé par un axe 38 un levier 39 commandé à l'aide d'une came 40 mue en rotation autour de son axe 41 par tout moyen connu agissant évidemment en synchronisme avec la commande du tapis pour que:

— la commande du déplacement du tapis en vue tant de l'évacuation d'une galette finie que de l'approche du nouveau pâton, et ce, jusqu'à ce qu'il parvienne en bonne place, n'agisse qu'après relevage de la tête et pour que, inversement,
— la commande de l'arrêt du tapis entraîne la libération du levier et laisse la tête redescendre au fur et à mesure de l'aplatissement du pâton.

Le guidage en translation verticale de la tête 18 dans la superstructure 17 est assuré par tout moyen connu tels que des colonnes (non représentées) et/ou par guidage de l'arbre 24. Pour sa commande en rotation, l'arbre peut être accouplé directement à un moteur ou recevoir une poulie 25 recevant son mouvement d'une courroie passée sur une poulie motrice éventuellement commune à plusieurs têtes 18.

Il est évident que l'invention n'est pas limitée à l'exemple décrit et représenté et qu'à partir des caractéristiques essentielles, d'autres formes de réalisation peuvent être adoptées et par exemple:

— le tapis peut avoir une avance continue, la tête suivant alors le pâton pendant son travail,
— pour des petites machines, le tapis peut être supprimé et le pâton est alors disposé à la main directement sur la table,
— la translation peut être commandée manuellement,
— le rouleau peut être mû en rotation autour de son axe et/ou peut avoir une génératrice autre que rectiligne et par exemple légèrement courbe ou même présenter des décrochements ou dessins qui s'imprimeront sur le dessus du pâton,
— le tapis ou la table peuvent recevoir une contre-forme sur laquelle sera travaillé la pâton par exemple pour former un fond de tarte ayant un rebord,
— au lieu d'un seul rouleau, chaque tête peut comporter plusieurs fins rouleaux sensiblement parallèles entre eux,
— le rouleau peut être une pièce qui en fait est immobile en rotation autour de son axe longitudinal, telle un sabot qui agit en glissant sur la pièce déformable.

**Revendications**

1. Procédé de façonnage d'au moins au pâton épais (9) disposé sur une table (16) pour lui donner la forme d'une élément plat (12) de contour sensiblement circulaire qui, notamment, pourra être utilisé comme pain spécial en forme de galette ou entrer dans la confection d'une préparation culinaire telle qu'une pizza ou une tarte, procédé selon lequel on aplatit le pâton (9) à l'aide d'au moins un rouleau de laminage (19) dont la génératrice inférieure (22) est parallèle ou légèrement inclinée vers la table (16) et qui rapport à la dite table (16):

— d'une part, en est progressivement rapproché et,
— d'autre part, est mû en rotation autour d'un axe (26) perpendiculaire à la dite table,

ce procédé étant caracterise en ce que, d'une part, on maintient le rouleau (19) sur le pâton (9) dans une position diamétrale, en ce qu'on utilise un rouleau (19) dont la longueur est supérieure au diamètre de la galette (12) à obtenir et dont l'axe de rotation (26) passe par son milieu, et en ce qu'on centre le pâton sur le dit axe (26), et, d'autre part, en ce qu'on immobilise en rotation et interpose, entre le pâton (9) et le rouleau (19), une pièce (33) déformable au passage du rouleau.

2. Machine pour la mise en oeuvre du procédé selon la revendication 1, comportant un bâti (2) présentant une table (16) et une superstructure (17) à laquelle est associée au moins une tête (18) de façonnage comprenant au moins un rouleau de laminage (19) dont la génératrice inférieure (22) est parallèle ou légèrement inclinée vers le plan de la dite table (16) et qui est mû en rotation autour d'un axe (26) perpendiculaire à la dite table, la dite machine comprenant en outre des moyens (38, 41) en vue du rapprochement du rouleau (19) et de la table (16) sur laquelle le pâton à travailler (9) est placé, cette machine étant caractérisée en ce que, d'une part, le rouleau (19) a une longueur supérieure au diamètre de la galette (12) à obtenir et en ce qu'il est associé à un support (23) solidaire d'un arbre (24) comportant un moyen (25) pour sa commande en rotation autour de l'axe (26) perpendiculaire à la table (16), le dit axe passant par le milieu du rouleau (19) et, d'autre part, en ce qu'elle comporte une pièce (33) déformable immobilisée en rotation et destinée à être interposée entre le rouleau et le pâton et au travers et par déformation de laquelle le rouleau (19) aplatit de pâton (9).

3. Machine selon la revendication 2, caractérisée en ce que, solidaires respectivement de la tête (18) et de la table (16), sont prévus des moyens (37) coopérant entre eux pour réaliser une butée réglable limitant le rapprochement relatif de la tête (18) et de la table (16).

## Patentansprüche

1. Verfahren zum Formen von mindestens einem auf einem Tisch (16) angeordneten dicken Teigstück (9) zu einem flachen, kreisförmigen Element (12) welches insbesondere als Spezialbrot in Form eines Fladens oder zum Beispiel für die Zubereitung einer Pizza oder Torte verwendet werden kann, wobei das Teigstück (9) mit Hilfe mindestens einer Walze bzw. Walzrolle (19) flach gewalzt wird, deren untere Erzeugende (22) parallel oder leicht schräg zu dem Tisch (16) angeordnet ist, wobei die Walze in bezug auf den Tisch (16) diesem einerseits genähert und andererseits um eine senkrecht zum Tisch angeordnete Achse (26) gedreht wird, dadurch gekennzeichnet, daß zum einen die Walze (19) auf dem Teigstück (9) in einer diametralen Lage gehalten wird, daß eine Walze verwendet wird, deren Länge größer ist als der Durchmesser des herzustellenden Fladens (12) und deren Drehachse sich durch ihre Mitte erstreckt, und daß das Teigstück auf der Drehachse (26) zentriert wird und daß zum anderen zwischen dem Teigstück (9) und der Walze (19) ein mit Hinblick auf den Durchlauf der Walze verformbares Teil (33) drehfest angeordnet wird.

2. Vorrichtung zur Durchführung des Verfahrens nach Anspruch 1, mit einem Vorrichtungskörper (2) aus einem Tisch (16) und einem Aufbau bzw. Überbau (17), an welchem mindestens ein Formungskopf (18) befestigt ist, welcher mindestens eine Walze (19) aufweist, deren untere Erzeugende (22) parallel oder leicht schräg zu der Ebene des Tisches (16) angeordnet ist, und welche Walze um eine senkrecht zum Tisch angeordnete Achse (26) gedreht wird, wobei die Vorrichtung des weiteren Einrichtungen (38, 41) hinsichtlich der Näherung des der Walze (19) und des Tisches (16) aufweist, auf welchem das zu bearbeitende Teigstück (9) angeordnet ist, dadurch gekennzeichnet, daß zum einen die Walze (19) eine Länge aufweist, die größer ist als der Durchmesser des herzustellenden Fladens (12), daß die Walze mit einer Halterung (23) verbunden ist, die an einer Welle (24) befestigt ist, welche einem Einrichtung (25) für deren Drehantrieb um die senkrecht zu dem Tisch angeordnete Achse (26) aufweist, welch letztere durch Mitte der Walze (19) hindurchgeführt ist, und daß zum anderen ein verformbares Teil (33) vorgesehen ist, welches drehfest und quer zwischen der Walze und dem Teigstück angeordnet ist, und durch dessen Verformung das Teigstück (9) von der Walze (19) flachgedrückt wird.

3. Vorrichtung nach Anspruch 2, dadurch gekennzeichnet, daß jeweils an dem Kopf (18) und dem Tisch (16) Einrichtungen (37) befestigt sind, die durch deren Zusammenwirken einen regelbaren bzw. einstellbaren Anschlag bilden, durch welchen die Näherung des Kopfes (18) und Tisches (16) begrenzt wird.

## Claims

1. A method of shaping at least one thick soft food ball (9) disposed on a table (16) in order to give it the shape of a flat element (12) with a substantially circular outline which, in particular, may be used as special bread in the shape of a galette or to be used in making a culinary preparation such as a pizza or a flan, according to which method the soft food ball (9) is flattened by means of at least one flattening roller (19), the lower generatrix (22) of which is parallel to or slightly inclined towards the table (16) and which with respect to the said table (16):

— on the one hand, is gradually brought closer to the table and,
— on the other hand, is rotated about an axis (26) perpendicular to the said table,

this method being characterized in that, on the one hand, the roller (19) is held on the soft food ball (9) in a diametrical position, in that a roller (19) is used, whose length is greater than the diameter of the galette (12) to be obtained and whose axis of rotation (26) passes through its centre, and in that the soft food ball is centred on the said axis (26), and, on the other hand, a part (33) deformable by the passing of the roller (19) is prevented from rotating and is placed between the soft ball (9) and the roller (19).

2. A machine for performing the method according to claim 1 comprising a structure (2) having a table (16) and a superstructure (17) with which is associated at least one shaping head (18) comprising at least one flattening roller (19), the lower generatrix (22) of which is parallel to or slightly inclined towards the plane of the said table (16) and which is rotated about an axis (26) which is perpendicular to the said table, the said machine further comprises means (38, 41) for bringing closer together the roller (19) and the table (16), on which the soft food ball (9) to be worked is placed, this machine being characterized in that, on the one hand, the roller (19) has a greater length than the diameter of the galette (12) to be obtained and in that it is associated with a support (23) which is rigid with a shaft (24) comprising a means (25) for controlling its rotation about the axis (26) which is perpendicular to the table (16), the said axis passing through the centre of the roller (19) and, on the other hand, in that the machine comprises a part (33) which can be deformed, is prevented from rotating, and is intended to be placed between the roller and the soft food ball, and across which and by the deformation of which the roller (19) flattens the soft food ball (9).

3. A machine according to claim 2, characterized in that means (37) are provided which are rigid with the head (18) and the table (16) respectively and which cooperate with one another in order to constitute an adjustable stop limiting the relative bringing together of the head (18) and the table (16).

Fig. _1

Fig._2

0015194